# EUROPÄISCHE PATENTANMELDUNG

(11) **EP 0 915 058 A2**
(43) Veröffentlichungstag der Anmeldung: **12.05.1999**
(21) Anmeldenummer: 98120694.9
(22) Anmeldetag: 06.11.1998
(51) Int. Cl.: C02F 1/44, C02F 1/52

(54) **Verfahren zur stofflichen Verwertung von ammoniumhaltigem Abwasser**

(30) Priorität: 07.11.1997 DE 19749419
(71) Anmelder: Fraunhofer-Gesellschaft zur Förderung der angewandten Forschung e.V., 80636 München (DE)
(72) Erfinder: Hirth, Thomas Dr., 77815 Brühl (DE); Schweppe, Rainer, 76228 Karlsruhe (DE); Höhn, Kai, 76744 Wörth (DE)
(74) Vertreter: Isenbruck, Günter (DE)

(57) **Zusammenfassung**

Es wird ein Verfahren zur umweltgerechten Aufarbeitung und stofflichen Verwertung von ammoniumhaltigem Abwasser, welches weitere lösliche Bestandteile und Feststoffe enthält, insbesondere von Gülle, mit den Schritten:
a) gegebenenfalls Abtrennung grober Feststoffpartikel;
b) Abtrennung von Feststoffen durch Ultrafiltration;
c) Zugabe eines Magnesiumsalzes als Fällmittel zum Filtrat der Ultrafiltration und Fällung von Ammonium als Magnesiumammoniumphosphat;
d) Abtrennung von gefälltem Magnesiumammoniumphosphat unter Gewinnung von im wesentlichen ammoniumfreiem Abwasser, welches die weiteren löslichen Bestandteile enthält;
e) Thermische Zersetzung von Magnesiumammoniumphosphat unter Gewinnung von Ammoniak und Rückgewinnung des Magnesiumsalzes beschrieben.

## Beschreibung

Die Erfindung betrifft ein Verfahren zur umweltfreundlichen Verwertung ammoniumhaltiger Abwässer, insbesondere von Gülle.

Die in der landwirtschaftlichen Tierhaltung anfallende Gülle weist wegen ihres hohen Gehaltes an Stickstoff, Phosphor und Kalium ein beachtliches Nährstoffpotential auf und wird daher als Dünger eingesetzt. Die heute praktizierte direkte Ausbringung der Gülle auf landwirtschaftlichen Nutzflächen ist jedoch mit Gefahren für die Umwelt verbunden. So wird dar klimaschädliche Gas Methan durch die Gülle freigesetzt. Durch Nitrifikation des Gülleinhaltsstoffes Ammoniak wird Nitrat gebildet, welches gewässerbelastend ist. Durch die in großem Maßstab betriebene Gülleausbringung kann es leicht zu einer Überdüngung kommen und der Nitratgehalt des Grundwassers die empfohlenen Grenzwerte überschreiten. Ammoniak gelangt in die Atmosphäre und wird mit dem Regen, beispielsweise über Waldgebieten, wieder zur Erde transportiert. Der damit verbundene Stickstoffeintrag stellt eine unerwünschte zusätzliche Düngung dar, die zu einer Überdüngung der Wälder beitragen kann.

Alternativ zur Entsorgung der Gülle durch ihre Ausbringung zur Düngung landwirtschaftlicher Nutzflächen wird heute eine umweltgerechte Aufbereitung der Gülle unter Wiedergewinnung der in ihr enthaltenen Wertstoffe angestrebt. Wertstoff ist in erster Linie auch das in der Gülle enthaltene Ammoniak. Dieses liegt, je nach pH-Wert, als physikalisch gelöstes Ammoniak oder in Form von Ammoniumionen vor.

Die heute praktizierten Verfahren zur Entfernung von Ammonium aus ammoniumhaltigen Abwässern arbeiten mit der seit langem bekannten Fällung des Ammoniums als Magnesiumammoniumphosphat. Das erhaltene Fällsalz Magnesiumammoniumphosphat stellt einen Wertstoff dar. Dieses kann beispielsweise als Dünger eingesetzt werden oder zur Gewinnung von Ammoniak zu Ammoniak und Magnesiumhydrogenphosphat zersetzt werden.

In DE-A 37 32 896 ist ein Verfahren zur Eliminierung von Ammonium und Phosphat aus Abwasser offenbart, bei dem durch Zugabe von Magnesiumsalz und/oder Magnesiumoxid Ammonium und Phosphat als MgNH₄PO₄ · 6H₂O (Magnesiumammoniumphosphat) auskristallisiert und abgetrennt wird. Das Verfahren kann, gegebenenfalls nach vorheriger Feststoffabtrennung, zur Behandlung von kommunalen und industriellen Abwässern sowie von Spezialabwässern mit hohem Ammoniumgehalt, wie beispielsweise Gülle, eingesetzt werden.

In DE-A 40 40 067 ist ein Verfahren zur Gewinnung der Ammoniumgehalte aus Prozeß- und Abwässern unter Fällung von Magnesiumammoniumphosphat beschrieben, bei dem zur beschleunigten Fällung und Abscheidung von Magnesiumammoniumphosphat dem zu behandelnden Abwasser in einer Fällungsstufe gleichzeitig Magnesiumhydrogenphosphat und Natronlauge zugesetzt werden. Das abgeschiedene Magnesiumammoniumphosphat wird in einer Regenerierungsstufe thermisch in Ammoniak und Magnesiumhydrogenphosphat zerlegt, wobei das Fällmittel wiedergewonnen und in die Fällungsstufe zurückgeleitet wird.

Nachteilig an den bekannten Verfahren ist, daß nur ein Teil der in der Gülle enthaltenen Wertstoffe genutzt werden. Angestrebt wird jedoch ein umfassendes wertstoffliches und rohstoffliches Recycling der Gülle unter Ausnutzung aller Inhaltsstoffe. Nachteilig an den bekannten Verfahren ist ferner, daß die behandelten Abwässer vergleichsweise geringe Ammoniumkonzentrationen aufweisen, so daß die Gewinnung von Ammoniak aus diesen Abwässern wegen der zu bewegenden großen Flüssigkeitsströme wenig wirtschaftlich ist.

Aufgabe der Erfindung ist es, ein Verfahren zur umweltgerechten Aufbereitung und stofflichen Verwertung von Gülle bereitzustellen, bei dem die in der Gülle enthaltenen Inhaltsstoffe möglichst umfassend wiederverwertet werden, und dar besonders wirtschaftlich arbeitet.

Gelöst wird die Aufgabe durch ein Verfahren zur stofflichen Verwertung von ammoniumhaltigem Abwasser, welches weitere lösliche Bestandteile und Feststoffe enthält, mit den Schritten:
a) gegebenenfalls Abtrennung grober Feststoffpartikel;
b) Abtrennung von Feststoffen durch Ultrafiltration;
c) Zugabe eines Magnesiumsalzes als Fallmittel zum Filtrat der Ultrafiltration zur Fällung von Ammonium als Magnesiumammoniumphosphat;
d) Abtrennung von gefälltem Magnesiumammoniumphosphat unter Gewinnung von im wesentlichen ammoniumfreiem Abwasser, welches die weiteren löslichen Bestandteile enthält;
e) Thermische Zersetzung des abgetrennten Magnesiumammoniumphosphats unter Gewinnung von Ammoniak und Rückgewinnung des Magnesiumsalzes.

Der Begriff Ammonium wird im folgenden als Oberbegriff für physikalisch gelöstes Ammoniak und Ammoniak in Form von Ammoniumionen verwendet, sofern nicht ausdrücklich zwischen beiden Spezies unterschieden wird. Ammoniumhaltige Abwässer sind kommunale oder industrielle Abwässer sowie spezielle Abwässer, wie Deponiesickerwasser, Kokereiwasser, Gülle oder Jauche, die einen erhöhten Ammoniumgehalt aufweisen. Die genannten Abwässer weisen neben Ammonium vorzugsweise weitere lösliche Bestandteile auf, insbesondere solche, die gewässerbelastend sind. Beispiele für weitere lösliche Bestandteile sind Kationen, wie Na⁺, K⁺, Mg²⁺, Ca²⁺, Fe²⁺, Cu²⁺, Zn²⁺ und Anionen, wie Chlorid, Nitrit, Nitrat, Sulfat, Carbonat und Phosphat.

In einem ersten Schritt a) werden grobe Feststoffpartikel, beispielsweise mit einem Durchmesser > 2 mm, abgetrennt. Dies ist bei stark feststoffhaltigen Abwässern, wie beispielsweise Gülle, in der Regel notwendig, kann aber gegebenenfalls entfallen. Die groben Feststoffpartikel können beispielsweise durch herkömmliches Sieben, in Kammerfilterpressen oder Siebbandpressen oder durch Sedimentation abgetrennt werden.

Die abgetrennten groben Feststoffpartikel können beispielsweise der Kompostierung zugeführt werden.

In einem zweiten Schritt b) werden durch eine Ultrafiltration die verbliebenen feineren Feststoffteilchen abgetrennt. Vorzugsweise wird eine Ultrafiltration nach dem Querstrom-Prinzip durchgeführt. Es können alle üblichen, bei der Ultrafiltration verwendeten Membrantypen eingesetzt werden. Beispiele sind Keramikmembranen, Polymermembranen, Edelstahlmembranen oder Glasmembranen. Vorzugsweise werden wenig abrasive Keramikmembranen eingesetzt. Die Porengröße der eingesetzten Membranen beträgt im allgemeinen 5 bis 500 nm, bevorzugt 10 bis 100 nm. In einem besonders bevorzugten Ausführungsbeispiel wird eine Siliziumcarbid-Membran mit einer mittleren Porengröße von ca. 50 nm eingesetzt. Durch die Ultrafiltration wird das ammoniumhaltige Abwasser vor Durchführung der Fällung von feinen Schwebeteilchen befreit. Dadurch wird einer Verunreinigung des in dem Fällungsschritt enthaltenen Fällsalzes vorgebeugt.

Durch die Ultrafiltration werden neben Feststoffteilchen auch zum Beispiel Öltröpfchen, Bakterien oder größere organische Moleküle zurückgehalten. Dadurch wird der Anteil an weiteren gelösten Stoffen im ammoniumhaltigen Abwasser insgesamt verringert. Die Ultrafiltration hat ferner den Vorteil, daß dar Abwasser dadurch weitgehend keimfrei wird. Es kann daher nach Abtrennung des Ammoniums in dem sich anschließenden Fällungschritt zur Bewässerung eingesetzt werden.

In einem weiteren Schritt c) wird aus dem Filtrat der Ultrafiltration Ammonium als Magnesiumammoniumphosphat gefallt. Die Fällung wird durch Zugabe eines Magnesiumsalzes als Fällmittel bewirkt. Geeignete Fällmittel sind beispielsweise Magnesiumphosphatverbindungen, wie Magnesiumhydrogenphosphat, welches gemeinsam mit Natronlauge zugegeben wird, oder Magnesiumoxid/Magnesiumhydroxid, gegebenenfalls zusammen mit Phosphat oder Phosphorsäure. Vorzugsweise wird in dem erfindungsgemäßen Verfahren die Fällung durch Zugabe von Magnesiumoxid als Fällmittel in Gegenwart von Phosphat bewirkt. Magnesiumoxid kann als Feststoff oder als wäßrige Anfschlämmung, bevorzugt als wäßrige Aufschämmung, zugegeben werden. Magnesiumoxid kann zusammen mit weiteren Magnesiumsalzen, beispielsweise Magnesiumchlorid, zugegeben werden. Vorzugsweise wird jedoch mit Magnesiumoxid allein gearbeitet, da der Einsatz von gewässerbelastenden Salzen unter ökologischen Gesichtspunkten grundsätzlich unerwünscht ist.

Die Fällung wird in Gegenwart von Phosphat durchgeführt. Phosphat kann bereits in dem ammoniumhaltigen Abwasser enthalten sein oder nachträglich, beispielsweise in Form von Phosphorsäure oder Phosphorpentoxid, zugegeben werden. Vorzugsweise ist zumindest ein Teil des Phosphats bereits in dem ammoniumhaltigen Abwasser enthalten, ein anderer Teil wird in Form von Phosphorsäure oder Phosphorpentoxid zugegeben. Durch Zugabe von Phosphat und Magnesiumoxid wird ein Molverhältnis Mg : N : P von im allgemeinen (1,0 bis 2): 1: (0,8 bis 1,2) eingestellt.

Der pH-Wert beträgt bei der Fällung im allgemeinen 8 bis 10, bevorzugt 8,2 bis 9,2, besonders bevorzugt ca. 8,2. Der pH-Wert kann bei alkalischen Abwässern, beispielsweise bei Gülle, durch Zugabe von Säure eingestellt werden. Bevorzugt wird dazu Phosphorsäure eingesetzt.

Das Magnesiumammoniumphosphat-Fällsalz wird in einem weiteren Schritt d) unter Gewinnung von im wesentlichen ammoniumfreien Abwasser abgetrennt. Die Abtrennung kann durch übliche Verfahren zur Fest/Flüssig-Trennung, beispielsweise durch Filtration, erfolgen. Vorzugsweise wird eine Trennung durch Sedimentation, beispielsweise in einem Absetzbehälter, herbeigeführt.

Gemäß einer weiteren bevorzugten Ausführungsform des erfindungsgemäßen Verfahrens wird die Fällung in zwei Stufen durchgeführt, wobei nach einer ersten Fällung nach Abtrennung des Fällsalzes durch nochmalige Zugabe von Magnesiumoxid und gegebenenfalls Phosphorsäure verbliebenes Ammonium nachgefällt wird.

In einem weiteren Schritt e) wird aus dem Fällsalz durch thermische Zersetzung Ammoniak gewonnen, wobei dar Fällmittel zurückgewonnen wird. Die thermische Zersetzung des Fällsalzes kann beispielsweise durch Dampf/Luft-Strippung durchgeführt werden.

Das erfindungsgemäße Verfahren wird vorzugsweise kontinuierlich durchgeführt, wobei dar in dem thermischen Zersetzungsschritt e) zurückgewonnene Magnesiumsalz im Fällungsschritt c) erneut als Fällmittel zugegeben wird.

Das nach Abtrennung des Fällsalzes erhaltene ammoniumfreie Abwasser weist einen Ammoniumgehalt von bis zu 50, bevorzugt von 1 bis 10 mg/l, und weitere lösliche Bestandteile auf. Es kann nach weiteren (optionalen) Reinigungsschritten, beispielsweise Ozonbehandlung oder Filterung mit Aktivkohle, dem Vorfluter einer Kläranlage zugeleitet werden. Es kann, auch ohne weitere Reinigung, in der Landwirtschaft, beispielsweise zum Entmisten von Stallanlagen, eingesetzt werden. Dadurch kann der Frischwasserverbrauch reduziert werden.

In einem weiteren Schritt kann aus dem ammoniumfreien Abwasser durch Umkehrosmose Reinwasser und ein Restkonzentrat, dar weitgehend, vorzugsweise :zu über 90 %, die weiteren löslichen Bestandteile enthält, gewonnen werden. Vorzugsweise wird die Aufkonzentrierung des ammoniumfreien Abwassers in einer Umkehrosmose durchgeführt. Der Aufkonzentrierungsfaktor beträgt dabei im allgemeinen zwischen 2 und 10, bevorzugt zwischen 3 und 8, besonders bevorzugt zwischen 5 und 7. Es können alle üblichen, in der Umkehrosmose verwendeten Membranmaterialien eingesetzt werden. Im allgemeinen beträgt die mittlere Porengröße der Membran < 5 nm, bevorzugt < 2 nm. Geeignete Membranen sind beispielsweise Kunstoffmembranen aus Polyamid, Polysulfon und Polypropylen. Diese können beispielsweise als Wickel- oder als Plattenmodule eingesetzt werden. Die Druckdifferenz beträgt im allgemeinen 10 bis 200 bar, bevorzugt 10 bis 100 bar, besonders bevorzugt 30 bis 70 bar.

In dem Umkehrosmoseschritt wird ein gereinigtes Abwasser (Reinwasser) erhalten. Das Reinwasser weist die weiteren löslichen Bestandteile in deutlich verringertem Maße auf. Vorzugsweise ist der Gehalt an weiteren löslichen Bestandteilen so gering, daß das Reinwasser dem Vorfluter einer Kläranlage zugeführt werden kann. Es kann auch zur Bewässerung in der Landwirtschaft eingesetzt werden.

In einer besonders bevorzugten Ausführungsform des erfindungsgemäßen Verfahrens wird als ammoniumhaltiges Abwasser Gülle eingesetzt. Vorzugsweise wird dabei in einem der Feststoffabtrennung und der Fällung vorgeschalteten Biogas-Prozeß in einem Biogas-Reaktor durch Fermentation aus der Gülle Methan gewonnen. Wahrend des Biogas-Prozesses kommt es durch mikrobiellen Abbau der in der Gülle enthaltenen organischen Stickstoffverbindungen zur Bildung von Ammoniak, wodurch der Ammoniumgehalt bis auf dar Dreifache erhöht werden kann. Dadurch fällt ein ammoniumhaltiges Abwasser mit erhöhtem Ammoniakgehalt an, so daß aus der angefallenen Gülle in hoher Ausbeute Ammonium gewonnen wird. Dadurch wird dar erfindungsgemäße Verfahren insgesamt wirtschaftlicher.

Durch Verbrennung des gewonnenen Methans in einem Verbrennungsmotor kann für das erfindungsgemäße Verfahren benötigte elektrische Energie gewonnen werden.

Das aus der Zersetzung des Fällsalzes erhaltene Ammoniak kann in Wasser gelöst werden und beispielsweise zu 25 gew.-%igem Ammoniakwasser verarbeitet werden.

Das gewonnene Ammoniak kann auch zur Rauchgasentstickung, beispielsweise von Verbrennungsmotoren, eingesetzt werden.

Durch die Kombination der einzelnen Verfahrensschritte wird eine unter ökologischen Gesichtspunkten vorteilhafte rohstoffliche und wertstoffliche Verwertung der ammoniakhaltigen Abwässer erreicht. Die Gewinnung von thermischer Energie durch Verbrennung von Methan aus Biomasse ist CO₂-neutral. Aus der Gülle gewonnenes Ammoniak kann zur Rauchgasentstickung der eingesetzten Verbrennungsmotoren eingesetzt werden. Das erhaltene gereinigte Abwasser ist keimfrei und kann zur Bewässerung eingesetzt werden. Ferner wird Ammoniakwasser als Wertstoff erhalten.

### Ausführungsbeispiel:

In einem ersten Schnitt wurden durch Siebung Feststoffe mit einer Partikelgröße > 2 mm abgetrennt und dann bei einem Druck von 2 bar unter Verwendung einer Keramikmembran eine Ultrafiltration durchgeführt. Dem erhaltenen Filtrat wurde ca. 85 %ige Phosphorsäure zugesetzt, bis sich ein pH-Wert von 7,5 einstellte. Zur Fällung von NH₄⁺ wurde dem Filtrat eine Aufschlämmung von MgO in Wasser in leicht überstöchiometrischer Menge (ca. 3% bezogen auf Phosphat) als Fällungsmittel zugegeben und kräftig gerührt. Der pH-Wert betrug 7,0. Es wurde 15 min stehen gelassen, bis sich ein fast reinweißer Niederschlag vom Magnesiumammoniumphosphat abgesetzt hatte. Es wurde eine im wesentlichen ammoniumfreie Mutterlauge erhalten.

Der Niederschlag bestand weitgehend aus Magnesiuammoniumphosphat-Hexahydrat.

## Patentansprüche

1. Verfahren zur stofflichen Verwertung von ammoniumhaltigem Abwasser, welches weitere lösliche Bestandteile und Feststoffe enthält, mit den Schritten:
a) gegebenenfalls Abtrennung grober Feststoffpartikel;
b) Abtrennung von Feststoffen durch Ultrafiltration;
c) Zugabe eines Magnesiumsalzes als Fällmittel zum Filtrat der Ultrafiltration und Fällung von Ammonium als Magnesiumammoniumphosphat;
d) Abtrennung von gefälltem Magnesiumammoniumphosphat unter Gewinnung von im wesentlichen ammoniumfreiem Abwasser, welches die weiteren löslichen Bestandteile enthält;
e) Thermische Zersetzung von Magnesiumammoniumphosphat unter Gewinnung von Ammoniak und Rückgewinnung des Magnesiumsalzes.

2. Verfahren nach Anspruch 1, dadurch gekennzeichnet, daß es kontinuierlich dürchgeführt wird, wobei dar im Schritt e) zurückgewonnene Magnesiumsalz erneut in Schritt c) als Fällmittel zugegeben wird.

3. Verfahren nach Anspruch 1 oder 2, dadurch gekennzeichnet, daß in einem weiteren Schritt aus dem ammoniumfreien Abwasser durch Umkehrosmose Reinwasser und ein Restkonzentrat, dar weitgehend die weiteren löslichen Bestandteile enthält, gewonnen wird.

4. Verfahren nach einem der Ansprüche 1 bis 3, dadurch gekennzeichnet, daß als ammoniumhaltiges Abwasser Gülle eingesetzt wird.

5. Verfahren nach Anspruch 4, dadurch gekennzeichnet, daß aus der eingesetzten Gülle in einem vorgeschalteten Biogas-Prozeß Methan gewonnen wird.

6. Verfahren nach einem der Ansprüche 1 bis 5, dadurch gekennzeichnet, daß dar gewonnene Ammoniak zur Rauchgasentstickung eingesetzt wird.

7. Verfahren nach einem der Ansprüche 1 bis 6, dadurch gekennzeichnet, daß dar gewonnene Ammoniak zu Ammoniakwasser weiterverarbeitet wird.

8. Verfahren nach einem der Ansprüche 1 bis 7, dadurch gekennzeichnet, daß die Fällung durch Zugabe von Magnesiumoxid in Gegenwart von Phosphat bei einem pH-Wert zwischen 7 und 8 bewirkt wird.

9. Verfahren nach einem der Ansprüche 1 bis 8, dadurch gekennzeichnet, daß die Fällung in mindestens zwei Stufen durchgeführt wird.
